# DEMANDE DE BREVET EUROPEEN

(11) **EP 4 030 332 A1**
(43) Date de publication de la demande: **20.07.2022**
(21) Numéro de dépôt: 22152075.2
(22) Date de dépôt: 18.01.2022
(51) Int. Cl.: G06F 30/13, G06F 111/10, G06F 111/20

(54) **PROCÉDÉ DE CONSTRUCTION D'UN BÂTIMENT D APRÈS UN POSITIONNEMENT PARAMÉTRIQUE DES VOLUMES IMMOBILIERS**

(30) Priorité: 18.01.2021 FR 2100458
(71) Demandeur: Modus Aedificandi, 13008 Marseille (FR)
(72) Inventeur: GUIDONI, Billy, 13008 MARSEILLE (FR)
(74) Mandataire: Fidal Innovation

(57) **Abrégé**

Un procédé informatisé de positionnement de volumes (5) immobiliers au sein d'un bâtiment (100) immobilier,
le bâtiment immobilier étant défini par une trame capable géométrique (2) géométrique tridimensionnelle formée par un ensemble d'unités élémentaires (3)
tridimensionnelles élémentaires prédéterminées,

Le procédé comprend les étapes successives suivantes :
- un module informatisé de paramétrage définit des paramètres de bâtiment (100) du bâtiment (100) immobilier,
- un module informatisé de paramétrage définit des paramètres de volume (5) d'un volume (5) immobilier :
o géométrie tridimensionnelle du volume (5) d'après un nombre d'unités élémentaires (3) élémentaires le composant et leurs positions relatives au sein du volume (5), et
o au moins un degré de liberté de position du volume (5) au sein de la trame capable géométrique (2), et/ou
o au moins une contrainte de position du volume (5) au sein de la trame capable géométrique (2),

- un module informatisé de combinaisons de positions de volumes (5) détermine une combinaison de positions des volumes (5), définis par le module de paramétrage, au sein de la trame capable géométrique (2) d'après les paramètres de chaque volume (5) et les paramètres de bâtiment (100), et
- un module informatisé de positionnement positionne les volumes (5) (3) au sein du bâtiment (100) d'après la combinaison déterminée.

## Description

### DOMAINE DE L'INVENTION

La présente invention se rapporte au domaine technique de la construction. En particulier, la présente invention concerne le domaine de l'immobilier collectif urbain, en construction neuve ou en réhabilitation, à destination d'habitations, de bureaux, de commerces, activités de services et/ou autres activités des secteurs secondaire ou tertiaire, d'équipements d'intérêt collectif et de service public.

### ARRIERE-PLAN TECHNOLOGIQUE

### L'offre urbaine est le nouveau paradigme

Les travaux de nombreux sociologues et urbanistes contemporains démontrent que les villes les plus prospères, les plus innovantes et où il fait le meilleur vivre sont celles qui accueillent le meilleur équilibre de personnes et de fonctions sur leurs territoires.

Pour parvenir à cet équilibre, les villes doivent parvenir à contenter leurs habitants, et capter des nouveaux urbains, qui sont de plus en plus mobiles, informés et attentifs à leur bien-être individuel.

Ceux-ci cherchent pour s'y fixer le lieu qui correspond le mieux à leurs besoins et modes de vie, et possède la meilleure offre urbaine globale, de culture, loisirs, commerces, de transports, d'espaces publics, mais aussi d'immobilier, pour s'y loger et y travailler.

Il est donc bénéfique aux villes de proposer la meilleure offre urbaine, au sein du meilleur environnement possible.

Les métropoles doivent s'adapter constamment à des besoins évolutifs, pour offrir à leurs habitants une offre adaptée à leurs demandes, et qu'on ne peut trouver nulle-part ailleurs.

### La demande façonne l'offre

L'ère du Fordisme du début du XXè siècle, où on commercialisait un produit destiné au plus grand nombre est révolu.

Si auparavant le service du sur-mesure était réservé majoritairement au secteur du luxe, il s'adresse désormais à tous et s'étend même aux produits de consommation de masse.

Plusieurs secteurs majeurs ont mis en œuvre des réponses ascendantes (ou DTC - Direct-To-Customer), permettant à la demande de fabriquer son offre individualisée.

Cette approche s'est illustrée de manière spectaculaire dans le prêt-à-porter de masse, l'industrie automobile, l'audiovisuel ou l'agro-alimentaire. Dans un contexte commercial ultra-concurrentiel de consommation individuelle, la personnalisation est de plus en plus appréciée.

On sort donc progressivement d'un modèle descendant, pour s'orienter vers un modèle ascendant.

### L'offre immobilière s'éloigne de la demande

Pourtant, alors que les modes de vie sont de plus en plus variés, que chacun revendique sa façon propre d'habiter et travailler, et que la conscience de ce qu'est l'immobilier de ses rêves s'est accru, l'immobilier reste une offre descendante.

En France, l'offre immobilière a peu évolué depuis le XIXe siècle : un acquéreur à la recherche d'un bien en zone urbaine a le choix entre deux catégories d'offres : le neuf et l'ancien. L'immobilier neuf est tenu à un niveau de performance réglementaire, mais propose une offre souvent standardisée, pour limiter les risques de commercialisation.

Sur la base d'études de marché sectorielles, statiques, basées sur le rythme d'écoulement et le prix de typologies, les promoteurs immobiliers proposent l'offre limitant le risque au minimum.

Ce qui veut dire que si une typologie à un certain prix s'est bien écoulée sur un secteur donné, un opérateur immobilier classique aura tendance à poursuivre dans ce sens - sans jamais savoir si d'autres demandes sont effectivement présentes sur le marché.

L'immobilier ancien propose une diversité de volumes et de typologies, mais l'état des bâtis nécessitent généralement des travaux de remise aux normes (performance énergétique, accessibilité, ...) dont la mise en oeuvre reste un aléa (coûts, délais) et peut dissuader les acquéreurs. Trouver un actif dans les délais, emplacement, état, budget et niveau de performance relève de la chance.

La maison individuelle demeure l'image de la personnalisation. Pourtant, elle ne peut répondre à toute la demande : elle est consommatrice d'espace et de ressources, ne permet pas le développement durable de la ville, et ne permet pas la mutualisation ni ne favorise le vivre ensemble.

Aujourd'hui, en France, on estime que près de trois quarts des acquéreurs en recherche de logement qui n'achètent pas ne le font pas parce qu'ils ne trouvent pas d'offre adaptée à leur demande. Ce constat s'applique également aux TPE/PME qui trouvent difficilement une offre adaptée à leur activité en centre-ville.

Alors que les autres secteurs majeurs ont adopté la personnalisation, l'industrie immobilière française a peine à évoluer.

On assiste donc à une dichotomie de plus en plus marquée entre l'immobilier dont on rêve, et l'immobilier que l'on produit.

Ainsi, tant dans l'immobilier neuf que dans l'immobilier ancien la demande n'est pas entièrement satisfaite. Ces inconvénients représentent des freins au développement des villes.

L'invention vise à résoudre les inconvénients de la production d'immobilier actuelle.

### RESUME DE L'INVENTION

L'invention a pour objectif de permettre la production d'immobilier qualitatif dans les villes françaises : personnalisable, durable et évolutif, au sein d'opérations collectives urbaines, neuves ou en réhabilitation. L'invention a pour objectif de permettre un immense champ des possibles, afin de répondre à la demande de tous les usagers, pour personnaliser leurs volumes tridimensionnellement, mutualiser des usages, tout en prévoyant l'évolutivité de l'actif dans le futur.

Ainsi, l'invention se rapporte à un procédé informatisé de positionnement de volumes immobiliers au sein d'un bâtiment immobilier,
le bâtiment immobilier étant défini par une trame capable géométrique tridimensionnelle formée par un ensemble d'unités élémentaires tridimensionnelles élémentaires prédéterminées, au sein d'un gabarit existant ou constructible, le procédé comprenant les étapes successives suivantes :
- un module informatisé de paramétrage définit des paramètres de bâtiment du bâtiment immobilier,
- un module informatisé de paramétrage définit des paramètres de volume d'un volume immobilier :
   - géométrie tridimensionnelle du volume d'après un nombre d'unités élémentaires le composant et leurs positions relatives au sein du volume, et
   - au moins un degré de liberté de position du volume au sein de la trame capable géométrique, et/ou
   - au moins une contrainte de position du volume au sein de la trame capable géométrique,
- un module informatisé de combinaisons de positions de volumes détermine une combinaison de position des volumes définis par le module de paramétrage au sein de la trame capable géométrique d'après les paramètres de chaque volume et les paramètres de bâtiment, et
- un module informatisé de combinaisons de positions de volumes positionne les volumes au sein du bâtiment d'après la combinaison déterminée.

Grâce à un tel procédé de positionnement, les futurs acquéreurs des volumes définissent les caractéristiques de leur projet immobilier, les degrés de liberté et/ou les contraintes de position, et le procédé positionne les volumes définis par les acquéreurs en répondant au mieux à la demande individuelle et collective, avant que le bâtiment ne soit construit. Le procédé permet de remplir intégralement le gabarit du bâtiment avec des volumes définis par les acquéreurs. Le procédé selon l'invention permet donc bien une démarche ascendante de la demande des acquéreurs vers l'offre immobilière. En cela, le procédé résout les inconvénients du parc immobilier existant explicités plus haut.

De plus, chaque acquéreur peut choisir ou déterminer une géométrie personnalisée pour son volume immobilier : on parle alors de volume personnalisé. Une fois que la géométrie d'un volume personnalisé est fixé, le procédé de positionnement est le même pour ce volume personnalisé. Le procédé offre donc la possibilité de personnaliser son volume et in fine une plus grande diversité d'offre pour la demande.

De plus, le procédé est reproductible une fois le bâtiment construit et offre la possibilité de redéfinir les volumes du bâtiment au cours de sa vie. Le procédé permet donc des usages différents dans le temps du bâtiment et donc un bâtiment s'adaptant à son environnement urbain et cohérent avec celui-ci plus longtemps. Autrement dit, le bâtiment en lui-même peut s'adapter à la demande en vue de sa construction mais aussi durant sa vie. Le bâtiment s'adapte à l'évolution des modes de vies des acquéreurs et/ou de son quartier.

Selon différents aspects, il est possible de prévoir l'une et/ou l'autre des dispositions ci-dessous.

Selon une réalisation, les modules informatisés de paramétrage, de détermination de combinaisons et de positionnement sont un seul et même module informatisé.

Selon une réalisation, le au moins un degré de liberté de position du volume est défini comme :
- un étage minimum au sein de la trame capable géométrique,
- une orientation géographique, et/ou
   une ou plusieurs contraintes de position du volume, définies comme :
- une ou plusieurs interdictions d'orientation, et/ou
- une ou plusieurs exclusions d'étages.

Après avoir choisi la géométrie des volumes, les acquéreurs peuvent définir leurs préférences de positionnement des volumes. La priorité étant donné à au choix de volumeles acquéreurs ne peuvent choisir la position exacte du volume, mais seulement une préférence de position ; néanmoins il est possible d'exclure des positions. Une telle définition de préférences et d'exclusion vise à garantir le plus grand champ des possibles à la démarche ascendante (ie de la demande vers l'offre), sans que l'offre n'impose une position non-souhaitée à la demande, tout en conservant le maximum de possibilités de combinaisons de volumes

De plus, si un acquéreur n'a aucune préférence de positionnement, il peut choisir de définir son volume avec tous les degrés de liberté possible. Cela revient à ne définir aucune restriction.

Selon une réalisation, le module informatisé de paramétrage définit au moins un des paramètres du bâtiment suivants :
- définition des unités élémentaires de la trame susceptibles de former un volume,
- définition du gabarit du bâtiment immobilier,
- définition des ouvertures de façades du bâtiment immobilier,
- définition des unités élémentaires qui peuvent ou pas fusionner avec d'autres unités élémentaires,
- définition des étages des unités élémentaires,
- définition des orientations des unités élémentaires,
- définition des surfaces des unités élémentaires,
- définition des prix des unités élémentaires,
- nombre maximum d'unités élémentaires dans un volume,
- nombre maximum d'unités élémentaires horizontales et/ou verticales dans un volume,
- pourcentage maximum de volumes ayant la même géométrie dans le bâtiment,
- positions possibles de la ou les circulations verticales (escalier et/ou ascenseur) au sein du bâtiment lorsqu'applicable,
- position des circulations horizontales,
- une distance maximale moyenne entre l'accès des volumes définis et l'accès à au moins une sortie de secours,
- programme(s) possible(s) pour chaque unité élémentaire, et/ou
- définition du plus petit un volume résiduel.

On rappelle que le gabarit, en architecture, désigne la taille et la forme générale que peut prendre un bâtiment en fonction des règlements d'urbanisme ou de l'enveloppe existante du bâtiment. Le gabarit est défini formellement par une volumétrie simple ou complexe dans laquelle doivent s'inscrire les constructions ou dans laquelle l'existant s'inscrit. Un gabarit est donc fixe une fois défini pour un projet immobilier donné. Ici, le gabarit du bâtiment existant ou constructible est défini et fixe pour l'ensemble des étapes du procédé.

De même, les positions des ouvertures de façades sont définies et fixes pour l'ensemble des étapes du procédé.

La définition des unités élémentaires est réalisée d'après le gabarit du bâtiment immobilier existant ou constructible. Elles peuvent être de formes différentes les unes des autres suivant le gabarit du batiment ou à l'inverse toutes identiques. Les unités élémentaires peuvent être parallépipédiques (de dimensions variables entre elles) ou, au contraire, présenter des formes plus complexes, i.e. non-parrallépédiques ; par exemple, des courbes, des angles non-droits ou encore former des volumes élémentaires non-convexes (également de dimensions variables entre les unités élémentaires).

La définition des unités élémentaires dépendant du gabarit du bâtiment - lui-même fixe une fois défini - celles-ci sont également fixes une fois l'étape de définition des unités élémentaires achevée. Ainsi, les volumes des unités élémentaires, les surfaces projetées des volumes élémentaires des unités élémentaires et plus généralement les dimensions des unités élémentaires sont fixes une fois l'étape de définition des unités élémentaires achevée.

Par extension, la trame géométrique tridimensionnelle formée par l'ensemble des unités élémentaires tridimensionnelles est entièrement définie une fois les unités élémentaires définies. Elle est également fixe puisque les dimensions des unités élémentaires et le gabarit le sont.

De même, par extension, la géométrie des volumes étant définie d'après un nombre d'unités élémentaires le composant et leurs positions relatives au sein du volumes, les volumes peuvent être de formes complexes, et leurs géométries sont également fixes et inchangés au cours du procédé de positionnement.

Ces paramètres permettent de paramétrer un bâtiment selon des critères prédéterminés. Ils sont parfois imposés lorsque le procédé est mis en oeuvre pour un bâtiment existant. La possibilité de prendre en compte des contraintes existantes du bâtiment permet une mise en œuvre plus large du procédé selon l'invention puisqu'il n'est pas réservé uniquement au bâtiment neuf.

Par exemple, la définition des unités élémentaires susceptibles de former un volume permet de réserver des espaces au sein de la trame pour un usage spécifique : par exemple un équipement public au rez-de-chaussée ou encore un espace commun ou partagé au sein de l'immeuble. De même, la définition des unités élémentaires qui ne peuvent pas fusionner avec d'autres unités élémentaires permet de prendre en compte, mais ne s'y limite pas, les contraintes structurelles d'un bâtiment existant (ses murs porteurs qu'on ne souhaiterait pas abattre et compensés par des travaux de sous-œuvre par exemple). Le procédé de l'invention permet de s'adapter à un grand nombre de bâtiments grâce aux paramètres de bâtiment pris en compte.

Un autre paramètre pertinent est la définition d'un volume résiduel. Le volume résiduel est le dernier volume restant qu'on souhaite obtenir a minima, une fois l'avant-dernier volume défini par les acquéreurs positionné. Cela permet d'éviter d'avoir un volume restant difficile à vendre ou à valoriser.

Cela permet d'éviter d'obtenir une combinaison dans laquelle des unités élémentaires éparpillées ou formant une géométrie non pertinente seraient laissées non utilisées. Ainsi, on définit un volume immobilier pris en compte dans la détermination de la combinaison de position. Ce volume particulier est appelé volume résiduel.

De manière préférentielle, le module informatisé de paramétrage :
- attribue une note de préférence à au moins un degré de liberté et/ou à au moins une contrainte de position de chaque volume, et

Pour chaque nouveau volume défini, le module informatisé de combinaisons de positions de volumes :
- détermine une combinaison de position de tous les volumes définis pour laquelle une moyenne pondérée des notes de préférence des volumes est maximale ou minimale, ou
- place ledit nouveau volume sur une liste d'attente.

Comme énoncé plus haut, les acquéreurs ne choisissent pas la position exacte de leur volume immobilier dans le bâtiment. Cependant, l'invention permet à chaque acquéreur de classer par préférence ses degrés de liberté de position et/ou contrainte de position pour son volume immobilier. Autrement dit, les acquéreurs attribuent une note de préférence à chacun des degrés de libertés et/ou contrainte de position définis pour le volume immobilier qu'il souhaite réserver. Le module informatisé de paramétrage enregistre ces notes et le module informatisé de combinaisons de positions de volumes détermine alors la combinaison de position des volumes qui maximise ou minimise une moyenne pondérée des notes définies pour les degrés de libertés de position et/ou les contraintes de position définies de tous les volumes immobilier à positionner, et ce à chaque fois qu'un nouveau volume est réservé et doit donc être positionné.

Puisque la combinaison de position est déterminée à chaque nouvelle définition d'un volume, le procédé de positionnement fonctionne, pour la liste principale de volumes positionnés selon une logique premier arrivé / premier positionné. Un volume validé dans la liste principale est toujours certain d'être positionné au sein du bâtiment à la fin du procédé de positionnement. Cependant, il n'obtient pas une position définitive au moment de sa réservation, mais simplement une position au sein de la combinaison en cours, qui ne sera définitive qu'à un terme défini.

L'invention fournit alors ainsi une combinaison limitant l'écart-type entre les classements pour une homogénéité des classements retenus et maximisant la satisfaction globale des acquéreurs. De manière préférentielle, le module informatisé de paramétrage redéfinit au moins un paramètre de bâtiment à chaque nouvelle détermination de combinaison de position par le module informatisé de combinaisons de positions de volumes.

Il est aussi possible que le module informatisé de combinaisons de positions de volumes détermine une combinaison de positions réservés, au terme d'un nombre ou une proportion de réservation de volumes, puis les assemble dans une partie du bâtiment. Les unités restantes pourront alors être soumises à des combinaisons de volumes ultérieures.

Il est aussi possible que le module informatisé de combinaisons de positions de volumes détermine une combinaison de position de volumes réservés, au terme d'un nombre ou une proportion de réservation de volumes, puis détermine une combinaison de volumes déterminée, selon les unités résiduelles pour parvenir à une combinaison totale de volumes satisfaisante.

Ainsi, il est possible à partir d'un certain taux de remplissage du bâtiment, soit de poursuivre les calculs de détermination de combinaisons, soit de figer une combinaison de volumes dans une partie du bâtiment et remettre les unités résiduelles à la disposition de la demande, soit encore de figer la position des volumes au sein du bâtiment en prédéterminant des volumes futurs figés, à disposition des futurs acquéreurs.

Dans tous les cas, qu'un volume soit choisi par un acquéreur et sa position déterminée par le module informatisé de combinaisons de positions de volumes, ou qu'un volume soit déjà positionné dans la trame, les acquéreurs peuvent toujours choisir de personnaliser l'aménagement intérieur leur volume immobilier. C'est un autre aspect de personnalisation du bâtiment offert par l'invention.

De manière préférentielle, en cas de suppression d'un volume déjà positionné au sein d'une combinaison de positions de volumes déterminée, le module informatisé de choix choisit au moins un volume de la liste d'attente pour lequel une combinaison de position de volumes déjà positionnés est possible selon une moyenne pondérée des notes de préférence minimale ou maximale.

Les volumes placés sur liste d'attente ne sont donc plus positionnés selon la logique premier arrivé / premier servi de la liste principale. En effet, ici, le module informatisé de combinaisons de positions de volumes détermine le volume de la liste d'attente parmi tous les volumes de la liste d'attente qui permet d'obtenir une combinaison de position maximisant ou minimisant la moyenne des notes de préférence des volumes déjà positionnés et dudit volume de la liste d'attente déterminé ; et ce indépendamment de l'ordre chronologique d'arrivée dans la liste d'attente dudit volume déterminé.

Selon une autre réalisation, le module informatisé de paramétrage définit en outre une position exacte d'un volume immobilier au sein de la trame capable géométrique.

Ce mode de réalisation permet au maître d'ouvrage, aux acquéreurs ou aux gestionnaires du bâtiment de définir une position précise d'un volume de géométrie donnée pour un usage particulier. Ce volume est pris en compte par le module informatisé de combinaison de position qui détermine la combinaison de position des volumes immobiliers en incluant le volume fixé dans la trame.

Dans le cas où ce volume immobilier est à usage collectif ou commun, le choix de ce volume peut se faire d'après un vote selon une pondération prédéterminée par les acquéreurs des volumes ou être imposé par le maître d'ouvrage par exemple.

Alternativement, il est possible que le volume immobilier fixé dans la trame soit à usage externe (exclusivement ou non) : ce peut être un restaurant en rez-de-chaussée ou sur le toit ou un jardin ou une piscine ou une terrasse etc.

De cette manière, le procédé permet d'utiliser au maximum de sa capacité la trame capable géométrique. Alternativement, le procédé détermine que, d'après la combinaison de position déterminée, le nombre d'unités élémentaires encore à utiliser correspond au minimum à un volume déterminé à l'avance. Cette combinaison déterminée grâce à l'invention offre alors la possibilité aux acquéreurs de s'entendre sur un usage partagé au sein de ce volume. L'invention permet ici encore une personnalisation de l'immobilier collectif urbain.

Il est envisageable qu'un même module informatisé soit apte à réaliser les actions de tout ou partie des modules informatisés définis plus haut. Ainsi, plusieurs modules informatisés peuvent être un seul et même module en pratique.

Selon un autre aspect, l'invention prévoit un programme informatique comprenant des instructions de code de programme pour l'exécution des étapes du procédé informatisé selon l'invention lorsque ledit programme est exécuté sur un ou des ordinateurs ou un ou des modules informatisés.

Par ordinateur on entend tout outil informatique apte à exécuter des programmes informatiques tels que des tablettes ou des téléphones intelligents dits « smartphone ».

Enfin, l'invention prévoit également un bâtiment conçu d'après le procédé informatisé de l'invention.

### BREVE DESCRIPTION DES DESSINS

Des modes de réalisation de l'invention seront décrits ci-dessous par référence aux dessins, décrits brièvement ci-dessous :
[Fig. 1] représente le gabarit 1 constructible ou existant sur une parcelle donnée.
[Fig. 2] représente la trame capable géométrique d'un bâtiment à construire ou existant, à partir de laquelle l'invention va être mise en œuvre.
[Fig. 3] représente une unité élémentaire de la trame capable géométrique.
[Fig. 4] représente des paramètres pouvant être associés aux unités.
[Fig. 5] représente des exemples de volumes 5 immobiliers définis à partir d'unités élémentaires 3.
[Fig. 6] représente un exemple de personnalisation en volume 5, l'acquéreur sélectionne, dans l'interface web, les unités de son futur volume 5, au sein d'une trame tridimensionnelle.
[Fig. 7] représente une position de volume 5 dans un bâtiment.
[Fig. 8] représente un gabarit 1 d'un bâtiment 100 dont la trame 2 est formée par des unités élémentaires simples, i.e. parallépipédiques, et des unités élémentaires 3 complexes, i.e. non parallépipédiques.
[Fig. 9] représente des exemples d'unités élémentaires 3. Elles sont différentes entre elles et de formes diverses, parallépipédiques ou non (courbes et/ou angles non droits).
[Fig. 10] représente des exemples de volumes 5 définis à partir d'unités élémentaires 3 complexes. Ce sont donc des volumes 5 complexes, i.e. présentant des formes courbes et/ou des angles non-droits d'après les unités élémentaires 3 complexes les composant.
[Fig. 11] représente un volume 5 complexe positionné dans un bâtiment 100.
[Fig. 12] représente un bâtiment 100 dont la trame capable 2 est rempli de volumes 5, complexes ou non, positionnés d'après le procédé de positionnement selon l'invention.
Sur les dessins, des références identiques désignent des objets identiques ou similaires.

### DESCRIPTION DETAILLEE

Nous allons à présent décrire plus en détail le procédé de l'invention et ses paramètres.

### Dispositifs requis pour la mise en œuvre du procédé

Le procédé selon l'invention est un procédé informatisé. Un module informatisé 8 le met en œuvre sur au moins un serveur informatique 9 ayant accès à une base de données 10 dans laquelle sont renseignés les paramètres manipulés par le module informatisé.

Le procédé selon l'invention est mis en œuvre via l'interface d'une application web 8 qui fait appel aux paramètres renseignés dans la base de données 10.

Le module informatisé selon l'invention est implémenté par un processeur 8 sur le serveur informatique 9. Il requiert un accès à la base de données 10 pour manipuler les paramètres renseignés.

Les modules informatisés de paramétrage et de combinaison de position peuvent être distribués sur plusieurs modules informatiques distincts.

Les acquéreurs interagissent avec le module informatisé via une interface de l'application web.

### Paramètres manipulés par le module informatisé

Les positions à déterminer des volumes 5 du bâtiment 100 doivent être en conformité avec les paramètres généraux du projet immobilier. Ces derniers sont les paramètres de la trame capable géométrique 2, ceux du bâtiment 100, ceux des unités élémentaires 3 et ceux des volumes 5.

D'autres paramètres sont manipulés par le module informatisé au cours du procédé de positionnement et ne sont donc pas fixés d'avance.

Tous les paramètres définis ci-dessous sont aptes à être pris en compte par le procédé de l'invention et notamment par le module informatisé de combinaisons de positions de volumes 5 lorsqu'il détermine les combinaisons de position des volumes 5 possibles.

### DEFINITION DE LA TRAME CAPABLE GÉOMÉTRIQUE 2

Le procédé selon l'invention permet de déterminer pour chaque projet immobilier une trame capable géométrique en fonction des possibilités structurelles et techniques. Autrement dit, on assimile le bâtiment existant ou à construire à une décomposition géométrique tridimensionnelle, régulière ou non. Cette décomposition géométrique tridimensionnelle définit le gabarit utilisable pour les futurs volumes 5 immobiliers ou espaces et équipements communs. Cette décomposition géométrique est appelée trame capable géométrique 2. Une fois définis, le gabarit utilisable et la trame capable sont fixes et n'évoluent pas au cours du procédé de positionnement.

Le bâtiment 100 sur lequel est appliqué le procédé de l'invention respecte bien sûr les contraintes classiques de génie civil. Le procédé de l'invention s'applique à tout type de bâtiments neuf ou existants. Cependant, il est préférable de travailler au sein d'un bâtiment en ossatures à combler, pour exploiter au maximum le procédé de positionnement de l'invention. Il est préférable qu'un libre remplissage de l'ossature du bâtiment 100 soit possible : au besoin, on réalise des travaux de sous-œuvre en ce sens pour un bâtiment existant ou on construit un bâtiment neuf avec des structures porteuses adéquates.

Par exemple, selon un mode de réalisation envisageable, les unités élémentaires 3 définies dans l'invention peuvent être réalisées concrètement par l'utilisation d'une structure porteuse en poteau-poutre : la structure est constituée de poteaux régulièrement espacés et reliés entre eux par des poutres. De plus, la structure et le principe de distribution des fluides ont un impact sur la définition des unités élémentaires 3 ainsi l'unité élémentaire 3 n'est pas forcément calquée sur le volume 5 délimité entre les poteaux et les poutres. Les unités élémentaires 3 forment un maillage de la trame capable géométrique 2. La maille élémentaire est l'unité élémentaire 3. Les unités élémentaires 3 ne sont pas forcément identiques entre elles, elles peuvent être différentes les unes des autres suivant le gabarit du bâtiment.

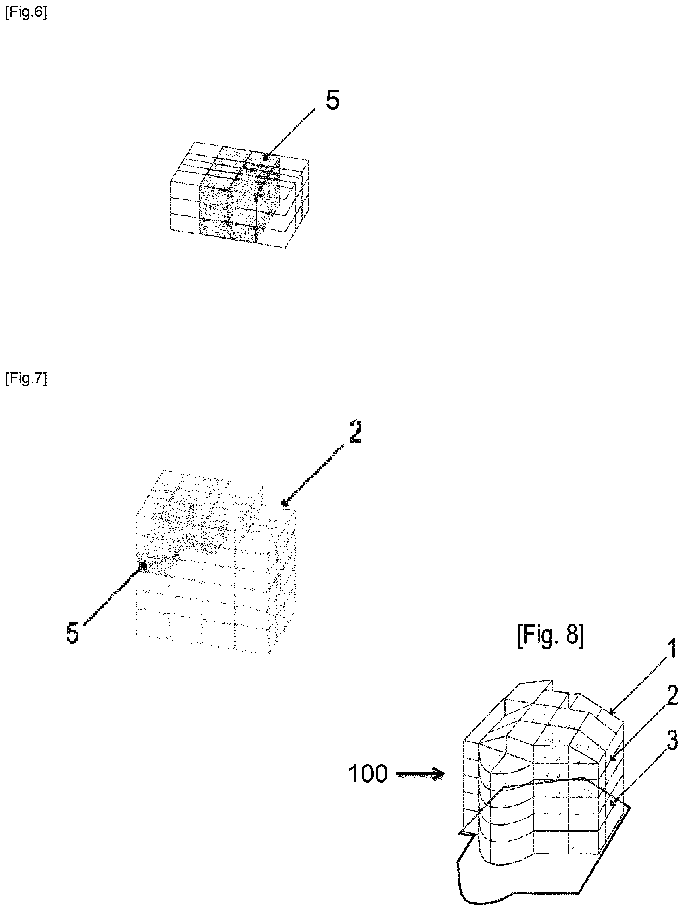

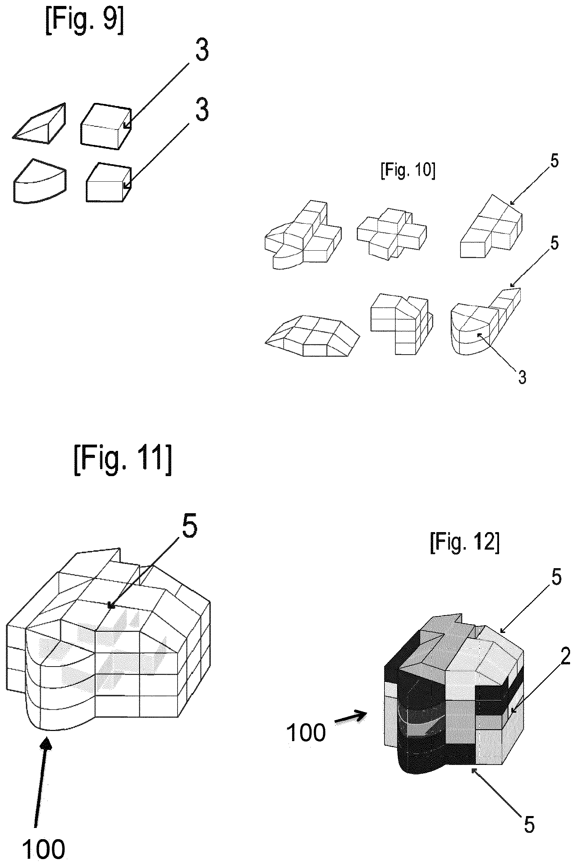

Comme illustré aux figures 8 à 10, les unités élémentaires 3 peuvent être parallépipédiques (de dimensions variables entre elles) ou, au contraire, présenter des formes plus complexes, i.e. non-parallépipédiques, par exemple, des courbes, des angles non-droits ou encore former des volumes non-convexes (également de dimensions variables entre les unités élémentaires). Les dimensions et la forme de chaque unité élémentaire 3 n'évoluent pas au cours du procédé de positionnement une fois qu'elles ont été définies.

Enfin, une telle structure, créée ou existante, permet de faire varier les cloisonnements intérieurs (planchers, plafond et murs) en les positionnant ou les enlevant : c'est cette possibilité qu'exploite le procédé de l'invention. Grâce à elle, il est possible de définir des volumes 5 à partir des unités élémentaires 3 de la trame capable géométrique.

Enfin, la structure permet également de redéfinir, après une première construction, les cloisonnements intérieurs (planchers, plafond et murs)en les repositionnant ou les enlevant, pour permettre à l'immeuble d'évoluer.

Pour un bâtiment existant, il est envisageable de prévoir des travaux de sous-œuvre afin de libérer les possibilités de combinaisons tridimensionnelles. Cela peut impliquer d'abattre tout ou partie des murs de refends, de faire des travaux de reprise en sous-oeuvre ou de créer des trémies. On obtient alors un bâtiment où un libre remplissage de l'ossature est possible.

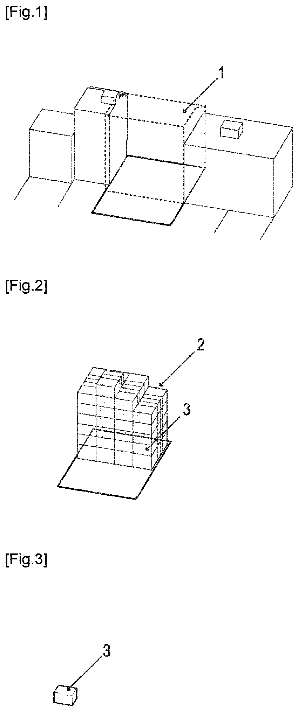

La figure 2 illustre une trame capable géométrique, ou trame géométrique, 2 d'un bâtiment 100. Elle est formée par des unités élémentaires 3 qui assemblées entre elles peuvent définir des volumes 5.

La trame capable géométrique 2 est définie d'après les critères suivants :
a- Le gabarit 1 du bâtiment 100 se base sur les règlements d'urbanisme et de la construction.
b- Les façades sont majoritairement ajourées, et leur composition permet de développer le maximum de typologies de volumes 5 qualitatifs tout en permettant de mixer les destinations (ie pour l'habitat : chambre / séjour / etc).
c- La trame capable géométrique 2 du bâtiment 100 permet une diversité de typologies et une grande possibilité de personnalisation.
d- Plusieurs possibilités de desserte sont parfois possible. En tous les cas, la desserte des lots doit permettre de maximiser les combinaisons de typologies de volumes 5, pour offrir le plus grand choix possible à la demande.

Ainsi, en amont des étapes de définitions des volumes 5 composés d'unités élémentaires 3 et du positionnement de ces volumes 5 au sein du bâtiment d'après le procédé de positionnement, le gabarit 1, les unités élémentaires 3 et la trame capable 2 formée par ces unités élémentaires 3 sont définis comme expliqué ci-dessus.

### PARAMETRES DU BATIMENT 100

Comme expliqué plus haut, il est préférable qu'un maximum d'ouvertures puisse être réalisé dans l'ossature du bâtiment pour exploiter au maximum le procédé de positionnement de l'invention. Cependant, le procédé de l'invention prend en compte des contraintes structurelles existantes ou inhérentes à la construction du bâtiment 100. Ces contraintes font l'objet des paramètres de bâtiment 100.

De plus, ces paramètres de bâtiment 100 permettent de préfigurer les contraintes générales auxquelles devront toujours répondre les autres paramètres d'unités et de volumes 5.

Un module informatisé de paramétrage définit les paramètres des unités du bâtiment. Ce paramétrage est issu d'une étude architecturale de capacité du site et de toutes les sujétions techniques (sécurité incendie, structure, accessibilité) ou programmatiques.

Ces paramètres 4, définissable par le module informatisé, peuvent être les suivants :

Circulation du bâtiment 100 :
Ce paramètre définit comment on accède aux volumes 5 par les circulations. Par exemple, un des paramètres possible est « coursive détachée » selon lequel les circulations verticales et les circulations horizontales sont détachés du bâtiment. Les volumes 5 sont donc accessibles depuis la coursive, sauf au rez-de-chaussée, où ils sont accessibles directement. D'autres paramètres de circulation sont prévus.

Distance de sécurité :
Distance maximum entre l'unité élémentaire 3 d'accès d'un volume 5 et la circulation verticale (ou l'évacuation) le plus proche.

Pourcentage d'unités élémentaires 3 réservées pour compléter le projet

Nombre maximum d'unités élémentaires 3 horizontales dans un volume 5

Nombre maximum de niveaux dans un volume 5

Nombre maximum d'unités élémentaires 3 dans un volume 5

Étages : Étages du projet (différent du paramètre Nombre maximum de niveaux dans un volume 5).

Types d'unités élémentaires 3 : Typologie d'unité élémentaire 3, pouvant être retrouvée à plusieurs étages du projet.

Orientations : Orientations possibles dans le projet.

Usages : Programmes immobilier possibles dans le projet. Les usages peuvent se combiner.

Exemples d'usages publics : habitation, bureau, commerces, parking etc.

Exemples d'usages non publics: espace partagé, espaces techniques etc.

Les circulations verticales du bâtiment 100:
Les unités élémentaires 3 qui, par groupées, peuvent exclusivement constituer des circlations verticales, à l'exception de toutes les autres.

Volumes 5 Collection :
Types de volumes 5 proposés en base dans le projet

Ratio de volumes 5 : Pourcentage maximum de chaque type volumes 5.

Les séparatifs du projet : définit les unités élémentaires 3 qui ne peuvent pas fusionner, mais peuvent être liées pour l'accès.

PARAMETRES D'UNITES 3

On divise cette trame capable géométrique 2 en unités élémentaires 3.

Ces paramètres définissent les propriétés de chaque unité élémentaire 3 au sein du bâtiment 100: certaines unités élémentaires 3 sont utilisables pour former des volumes 5, d'autres sont utilisés pour les circulations verticales du bâtiment, certaines doivent être combinées et ne peuvent être laissées seules etc. Les propriétés des unités élémentaires 3 définissent des contraintes à respecter pour la génération des volumes 5.Comme indiqué précédemment, les dimensions et la forme de chaque unité élémentaire sont déjà définies et fixes.

Les paramètres suivants d'unités élémentaires 3 sont des paramètres algorithmiques. Ils peuvent être ceux manipulés par le module informatisé, d'autres sont possibles :

Nom de l'unité élémentaire 3 : Nom unique de l'unité dans le projet : généré automatiquement en combinant le type d'unité élémentaire 3 avec l'étage.

Etage : Étage auquel se situe l'unité élémentaire 3.

Orientations(s) : La ou les orientation(s) de chaque unité élémentaire 3.

Usage(s) : Programme(s) possible(s)s pour l'unité élémentaire 3.

Surface : Surface commercialisable de l'unité élémentaire 3.

Nombre de pièces : Détermine combien de pièces (au sens commercial du terme) peuvent-être admises dans l'unité élémentaire 3.

Unité élémentaire 3 de circulations verticales :
L'unité élémentaire 3 peut-elle être utilisée en tant que circulation verticale ? Par exemple : vrai.

Unité élémentaire 3 circulation : L'unité élémentaire 3 peut-elle être utilisée en tant que circulation ? Par exemple : vrai.

Unité élémentaire 3 fusionne avec :
Quelles unités élémentaires 3 peuvent se fusionner (pour créer un volume 5, ou juste parce qu'il y a une porte entre les deux).

Unité élémentaire 3 bloquée : Si l'accès de l'unité élémentaire 3 à une circulation verticale ou horizontale peut être bloqué par une autre unité élémentaire. Dans le cas positif, l'unité élémentaire 3 doit toujours être combinée à au moins une unité élémentaire 3 dont le paramètre unité élémentaire 3 bloquée est non.

Unité élémentaire 3 orpheline : L'unité élémentaire 3 peut-elle être vendue seule ?

Unité élémentaire 3 pouvant être invendue : L'unité élémentaire 3 peut-elle être laissée invendue à l'issue du projet ?

L'unité élémentaire 3 d'accès :
Entre-t-on par cette unité élémentaire 3 ? Cette unité élémentaire 3 donne-t-elle accès à une circulation verticale ou horizontale ?

Unité élémentaire 3 disponible :
L'unité élémentaire 3 est-elle mise à la disposition des acquéreurs - dans le cas d'une circulation verticale, la réponse est non.

Membre de l'unité élémentaire 3 :
Si l'unité élémentaire 3 est réservée, ce paramètre détermine à quel membre l'unité élémentaire 3 est assignée dans l'itération actuelle de l'algorithme.

### PARAMETRES DE VOLUMES 5

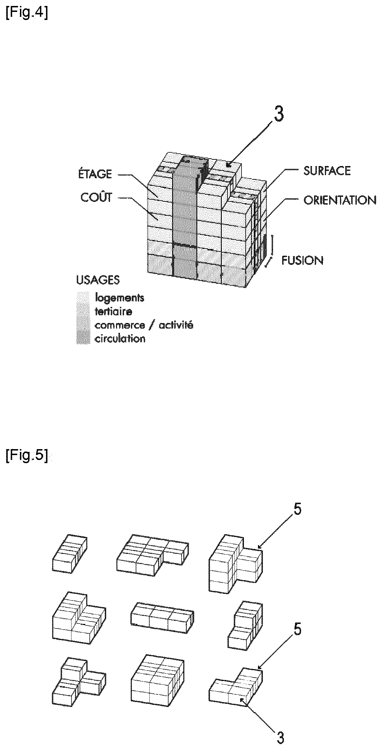

Comme illustré à la figure 5, les unités élémentaires 3 servent à concevoir la géométrie des volumes 5 du bâtiment.

Ces paramètres définissent les volumes 5. Ils peuvent être calculés à partir des paramètres des unités élémentaires 3 composant les volumes 5. Le module informatisé les manipule pour déterminer les combinaisons possibles de positions tout en veillant à ce que les paramètres du bâtiment 100 soient respectés.

Tous les paramètres suivants sont susceptibles d'être définis et/ou manipulés par le module informatisé. D'autres paramètres sont possibles.

Nommage du volume 5 : Chaque volume 5 possible au sein d'un bâtiment 100 est défini par un nom unique, qui permet de définir sa géométrie, en combinant des chiffres et des lettres, en référence aux unités élémentaires 3 qui forment le volume 5) et leur disposition dans l'espace.

Type de volume 5 :
Quel est le nom de ce type de volume 5, proposé par défaut.

Niveaux de volume 5 :
Niveau(x) pour ce type de volume 5, selon les étages des unités élémentaires 3 qui peuvent le composer.

Orientation(s) :
Orientation(s) pour ce type de volume 5, selon les orientations des unités élémentaires 3 qui peuvent le composer.

Programme :
Programme(s) pour ce type de volume 5, selon les programmes des unités élémentaires 3 qui peuvent le composer.

Surface du volume 5:
Surface la plus haute pour ce type de volume 5, selon la somme des surfaces des unités élémentaires 3 qui peuvent le composer.

Nombre de Pièces du volume 5:
Nombre de pièces maximum pour ce type de volume 5, selon la somme des nombres de pièces des unités élémentaires 3 qui peuvent le composer.

Identifiant du volume 5 :
Identifiant unique d'un volume 5 dans le bâtiment 100, pouvant être assigné à un Membre. Ex : V102

Unités de volume 5 :
Unités composant le volume 5, dans l'itération actuelle du procédé de positionnement.

Accès du volume 5 :
Unité d'accès du volume 5 (au niveau inférieur).

Volume 5 disponible :
Le volume 5 est-il disponible dans l'itération actuelle du Projet ?

Membre du volume 5 :
Quel Membre a réservé le volume 5 dans l'itération actuelle du Projet?

Circulation du volume 5.

Disponible :
Le volume 5 est-il disponible aux membres depuis la plateforme ?

Surface du volume 5 :
Surface pour ce type de volume 5, selon la somme des surfaces des unités élémentaires 3 qui peuvent le composer.

Géométrie des volumes 5

Combinées entre elles, les unités élémentaires 3 forment des volumes 5 qui peuvent devenir en fonction des besoins, un appartement, un local professionnel, un local commercial etc. Des volumes 5 prédéfinis par le module informatisé d'après les paramètres généraux sont proposés à la sélection pour le futur acquéreur. Un large panel de volumes 5 est proposé en « collection » ; les volumes 5 peuvent être horizontaux ou superposés sur plusieurs niveaux de manière à créer des duplex voire des triplex comme illustré à la figure 5.

Comme indiqué précédemment, la géométrie des volumes 5 étant définie d'après un nombre d'unités élémentaires 3 le composant et leurs positions relatives au sein du volume, les volumes 5 peuvent être de formes complexes, et leur volumétrie, et plus généralement leurs dimensions, sont également fixes et inchangées au cours du procédé de positionnement.

Comme indiqué dans le préambule puis à propos des paramètres du bâtiment 100, les volumes peuvent avoir les usages suivants :
- Exemples d'usages publics : habitation, bureau, commerces, parking etc.
- Exemples d'usages non publics: espace partagé, espaces techniques etc.

Plus généralement, les volumes 5 peuvent être des habitations, des bureaux, des commerces, être destinés à des activités de services et/ou autres activités des secteurs secondaire ou tertiaire, ou encore être à destination d'équipements d'intérêt collectif et de service public.

Un volume 5 ne peut pas comprendre d'unités élémentaires 3 affectées à la circulation au sein du bâtiment. De telles unités élémentaires 3 sont connues du modèle de paramétrage d'après le paramètre Unité élémentaire 3 circulation ou Unité élémentaire 3 circulation verticale. De même, les réseaux techniques (fluides et électriques) sont définis en amont du procédé de positionnement et le positionnement des volumes 5 n'influent pas sur le positionnement de ces réseaux techniques.

Le demandeur se réserve le droit de renoncer à l'une de ces définitions du volume 5 si cela s'avère nécessaire pour respecter les critères de brevetabilité.

L'acquéreur a donc le choix entre plusieurs volumes 5 proposés sur la plateforme. Il peut choisir lui-même la géométrie désirée du volume 5.

Cependant, l'invention permet de définir soi-même la géométrie du volume 5 choisi. Cette géométrie est définie par le nombre d'unités élémentaires 3 combinés dans un volume 5 et par leurs positions relatives au sein du volume 5.

Grâce à ce procédé, il est possible de concevoir un volume 5 sur-mesure à l'aide d'un outil de personnalisation de volumes 5 accessible depuis l'application web, grâce à une grille tridimensionnelle dans laquelle il peut dessiner le volume 5 de son choix, comme illustré à la figure 6.

Equipements communs ou partagés

Selon l'invention, on peut prévoir que des unités élémentaires 3 de la trame capable géométrique 2 soient réservées à des usages partagés. Les unités élémentaires 3 en question ne sont donc plus utilisables pour positionner des volumes 5 dans la trame. Le cas échéant, des modules de vote permettent au groupe des acquéreurs de volumes 5 de choisir les usages des espaces et équipements partagés : plusieurs équipements ou espaces communs sont proposées pour chaque thème sur lequel le groupe doit se prononcer.

Idéalement, le mode de scrutin est un vote pondéré selon une pondération prédéterminée. Ainsi, les options proposées sont classées par ordre de préférence :
ce n'est pas l'option qui aura obtenu le plus de premier choix qui l'emporte, mais celle qui a la meilleure appréciation générale. Cependant, tout autre mode de scrutin est envisageable.

### Mise en œuvre du procédé

Un des moyens de mise en œuvre du procédé est de recourir à une application web.

### RENSEIGNEMENTS DES PARAMETRES GENERAUX

Tous les paramètres d'un bâtiment 100 sont d'abord renseignés via une interface administrateur de l'application, avant qu'un projet ou bâtiment 100 devienne public en étant publié sur l'application mettant en œuvre le procédé selon l'invention.

Sur la base des paramètres de bâtiment 100, un module informatisé génère une pluralité de volumes 5 susceptibles de s'intégrer dans la trame capable géométrique 2.

En pratique, la définition des paramètres généraux décrits ci-dessus alimente une base de données 10 auquel a accès un module informatique stocké sur un serveur en données. En réponse à cela, le module informatique génère un résultat et renvoie les données à l'application web.

### DEFINITION DE LA GEOMETRIE DES VOLUMES 5 PAR L'ACQUEREUR

Via l'interface clients de l'application web, les acquéreurs peuvent trier les volumes 5 collection d'après leurs paramètres. Sur la base des critères de tri, une proposition des volumes 5 répondants aux critères est déterminée et affichée par l'application web d'après les paramètres de volumes 5.

Les acquéreurs peuvent choisir un volume 5 à acquérir à partir de ces volumes 5 ou définir un volume 5 personnalisé eux-mêmes. Bien sûr, un tel volume 5 personnalisé doit respecter les paramètres de bâtiment 100.

A ce moment du procédé, les acquéreurs définissent des degrés de liberté de position du volume 5 et/ou des contraintes de position du volume 5 à acquérir dans le bâtiment 100. Autrement dit, le futur acquéreur ne peut pas définir l'emplacement final de son volume 5 dans le projet. Cependant, la position du volume 5 réservé déterminée par le procédé respecte les degrés de libertés de position et les exclusions en matière d'étage et d'orientation (définies par les contraintes de position), mais ne sera définitivement fixée que lorsque l'ensemble des volumes 5 auront été définis (ou que le promoteur décide de figer les positions pour les volumes 5 déjà positionnés bien sûr).

Selon l'invention, un degré de liberté de position du volume 5 peut être défini comme :
- un étage minimum au sein de la trame géométrique,
- une orientation géographique, et/ou
Une contrainte peut être définie comme :
- interdiction d'une orientation, et/ou
- exclusion d'un étage.

Par exemple, le futur acquéreur peut préciser les degrés de liberté de position et contrainte de position suivants :
- En préférence 1, au 4ème étage
- En préférence 2, au 3ème étage
- En excluant le rez-de-chaussée
- En préférence 3, orientation Sud

Enfin, on peut prévoir que l'acquéreur ne définisse pas une géométrie du volume 5 fixe. Dans ce cas, de la même manière que des degrés de libertés de position et/ou des contraintes de positions sont définis, il est possible qu'il définisse des degrés de libertés de position des unités élémentaires 3 et/ou des contraintes de position des unités élémentaires 3 formant la géométrie du volume 5.

Par exemple, un acquéreur peut définir son volume 5 comme étant formé par huit unités élémentaires 3 réparties sur minimum deux niveau et maximum cinq. La géométrie du volume 5 est alors paramétrée voire classé par ordre de préférence mais non définie.

Dans ce cas, la géométrie des volumes 5 est un paramètre variable pris en compte par le procédé de positionnement et notamment dans la détermination des combinaisons de positions possibles et/ou dans le choix de la combinaison de position finale.

### Détermination des combinaisons de position possibles

Selon l'invention, le positionnement exact de chaque volume 5 défini est déterminé par le module informatisé de combinaisons de positions de volumes 5.

A chaque fois qu'un volume 5 est défini par un futur acquéreur au moyen d'un module informatisé de paramétrage, le module informatisé de détermination de combinaison détermine s'il existe une combinaison de position des volumes 5 respectant au moins un degré de liberté et/ou une contrainte de position des volumes 5 à positionner. Evidemment, l'ensemble des volumes 5 à positionner sont les précédents volumes 5 définis (et déjà positionnés d'après une combinaison de position déterminée précédement) et le nouveau volume 5 défini.

Le module informatisé de combinaisons de positions de volumes 5 détermine à chaque nouvelle réservation de volume 5, ou changement dans les réservations (désistement, retrait, etc) si il existe une combinaison de position respectant au moins un degré de liberté et/ou une contrainte de position pour tous les volumes 5 définis à positionner ou les volumes 5 déjà positionnés et au moins un volume 5 de la liste d'attente.

Idéalement, le module informatisé de combinaisons de positions de volumes 5 enregistre les classements attribués par les acquéreurs aux au moins un degré de liberté de position et/ou au moins une contrainte de position. Ces classements sont compris entre 1 et le nombre de degré et/ou contrainte définis pour un volume 5.

Ce faisant, chaque acquéreur d'un volume 5 classe par ordre de préférence les degrés de liberté de position et/ou contrainte de positions définis. En reprenant les exemples de degrés de liberté de position et/ou contrainte de position précédents, un tel classement peut être le suivant :
- Etage :
   Choix n°1 : au 4ème étage
   Choix n°2 : au 3ème étage
   Exclusion : le RDC
- Orientation
   Choix n°1 : Orientation Sud

Autrement dit, chaque acquéreur attribue une note de préférence à chacun des degrés de libertés et/ou contrainte de position. Il peut les classer par ordre croissant ou décroissant de préférence : le 1 correspond au meilleur classement et ainsi de suite ou l'inverse.

Le module informatisé de détermination détermine alors une combinaison qui, outre qu'il respecte au moins au moins un degré de liberté et/ou une contrainte de position des volumes 5 à positionner, minimise ou maximise la moyenne pondérée des notes de préférences suivant l'ordre choisi des notes, et restitue une réponse, en temps réel ou différé, de position du volume 5, en liste principale ou liste d'attente.

### Projet complet

On peut considérer que le projet est complet si :
- l'ensemble des unités élémentaires 3 sont utilisées, ou
- l'ensemble des unités élémentaires 3 autres que celles dédiées à un équipement ou volume 5 personnalisé définies dans les paramètres du bâtiment sont utilisées, ou
- un nombre ou pourcentage d'unités élémentaires 3 utilisées défini est atteint, ou
- le nombre d'unités élémentaires 3 non encore utilisées est susceptible de former ensemble un volume 5 personnalisé.

Alternativement, on peut décider de figer une partie des positions et d'appliquer le procédé de l'invention aux unités élémentaires 3 non encore utilisées.

### Exemple

Nous allons à présent présenter un mode de réalisation particulier et les étapes mises en œuvre par les modules informatisés.

Chaque volume 5 est défini par un acquéreur. La définition par l'acquéreur des volumes 5 peut consister en la sélection d'un volume 5 à la géométrie déjà définie et proposé à l'acquisition dans l'application web, ou à la définition manuelle et personnalisé du nombre d'unités élémentaires 3 composant le volume 5 et leurs positions mutuelles les unes par rapport aux autres au sein du volume 5 (ie la géométrie tridimensionnelle du volume 5). Quoiqu'il en soit, sélectionner un volume 5 proposé ou le définir soi-même aboutit à une définition complète et non équivoque du volume 5.

De plus, l'acquéreur sélectionne ou définit des degrés de libertés de position et/ou contraintes de position de son volume 5. Ces degrés de libertés de position et/ou contraintes de position peuvent être classés par ordre de préférence grâce au module de paramétrage.

Ce classement peut prendre la forme de l'attribution d'une note de préférence. Par exemple, les notes les plus élevées correspondent aux préférences les plus souhaitées : une note de 3 pour la première préférence, une note de 2 pour la seconde et une note de 1 pour la troisième.

Alternativement, les notes les plus basses correspondent aux préférences les plus souhaitées : une note de 1 pour la première préférence.

Comme énoncé plus haut, si l'acquéreur ne souhaite définir aucun degré de libertés et/ou contrainte de position pour son volume 5, tout se passe comme si tous les degrés de libertés étaient choisis pour ce volume 5.

Ainsi, le module informatisé de combinaisons de positions de volumes détermine, à chaque nouvelle définition d'un volume 5 et de ses degrés de libertés de position et/ou contraintes de position auxquels ont été attribués une note de préférence, la combinaison de positions qui :
- dans le cas où les notes les plus basses correspondent aux préférences les plus souhaitées, minimise la moyenne des notes de préférences des positions formant la combinaison de position, ou
- dans le cas où les notes les plus élevées correspondent aux préférences les plus souhaitées, maximise la moyenne des notes de préférences des positions formant la combinaison de position.

De manière préférentielle, l'option de minimisation est choisie puisqu'il y a alors aucune différence entre les différentes premières préférences des acquéreurs quel que soit le nombre de préférences définies : chacune reçoit la note de 1 peu importe le nombre de préférence totale défini.

La combinaison est déterminée à chaque nouvelle définition d'un volume 5 qu'il faut alors intégrer au bâtiment. Les positions des volumes 5 positionnés selon la combinaison précédente sont susceptibles de changer, et leur nouvelle position peut corresponde à une nouvelle préférence, meilleure ou non, puisque que la combinaison déterminée minimise ou maximise la moyenne des notes de préférences de tous les volumes 5 à positionner (incluant donc le nouveau volume 5 défini).

Selon un mode de réalisation préféré, nous rappelons que la combinaison est déterminée en incluant le volume 5 résiduel - le cas échéant doté lui-même de degrés de liberté et/ou de contrainte de position - dans l'ensemble des volumes 5 à positionner dans la trame capable géométrique 2.

Il est également possible qu'une étape de détermination de toutes les combinaisons possible soit effectuée au préalable. Dans ce cas, cet ensemble de combinaison est stocké en mémoire par le module de combinaison de position et il détermine à partir de cet ensemble la combinaison qui maximise ou minimise les notes de préférence.

Idéalement, cette étape n'est pas réalisée (à tout le moins, l'ensemble des combinaisons n'est pas stockée) car la puissance de calcul permet de déterminer immédiatement la combinaison qui minimise ou maximise : soit on raisonne à partir d'une gémométrie tridimentionelle directement et la combinaison est déterminée automatiquement, soit la puissance de calcul des combinaisons de positions sous forme de coordonnées est recalculée à chaque nouveau volume.

Le module informatisé de combinaisons de positions de volumes 5 intègre d'après ces étapes précédentes le maximum de volume 5 dans la trame tant qu'il est possible de respecter au moins une préférence de position définie pour les volumes 5 déjà positionnés.

Si il arrive un moment où il n'est plus possible d'intégrer le nouveau volume 5, ie de respecter au moins une préférence de position de ce nouveau volume 5, tout en respectant au moins une préférence des volumes 5 déjà positionnés alors le nouveau volume 5 considéré est mis en liste d'attente.

Le module informatisé de combinaisons de positions de volumes 5 s'arrête quand il n'est plus possible de positionner un nouveau volume 5 défini à positionner en respectant au moins une préférence pour tous les volumes 5 déjà positionnés et le dernier volume 5 réservable défini (le volume 5 résiduel).

Le module informatisé de combinaison a donc déterminé une combinaison de position pour un ensemble de volumes 5 et le cas échéant a construit une liste d'attente de volumes 5 qu'il n'a pas été possible de positionner.

Selon cet exemple de réalisation, le module informatisé de combinaisons de positions de volumes positionne les volumes 5 selon cette combinaison déterminée.

### Désistement d'un acquéreur - suppression d'un volume 5 positionné

En cas de désistement d'un acquéreur d'un volume 5 déjà positionné, le retrait du volume 5 rend disponibles les unités élémentaires 3 qui le composent. La question est de savoir que faire de ces unités élémentaires (3). Dans cet exemple, le module de choix place en priorité un volume 5 de la liste d'attente pour lequel la géométrie et au moins une préférence définie pour ce volume 5 permettent le remplacement du volume 5 supprimé (ou désisté). Dans ce cas-là, toutes les combinaisons de positions ne sont pas recalculées en cas de désistement ie de suppression d'un volume 5 positionné.

Il est aussi possible qu'un ou plusieurs volumes 5 soient positionnables dans les unités rendues disponibles par la suppression du volume 5 désisté.

Il est aussi possible qu'aucun volume 5 de la liste d'attente ne permette de s'intégrer dans la combinaison de positions de volumes actuelle, en utilisant les unités rendues disponibles par la suppression du volume 5 désisté, et les unités disponibles. Dans ce cas, les positions des volumes déjà réservés dans la trame capable géométrique sont recalculées, en intégrant un ou plusieurs volumes 5 de la liste d'attente, jusqu'à arriver à la meilleure combinaison de position de volumes, minimisant ou maximisant la moyenne des notes de préférences de tous les volumes 5 déjà positionnées, et de volumes 5 de la liste d'attente à positionner.

Alternativement ou en complément, il est possible de déterminer la combinaison de volumes 5 qui minimise ou maximise la moyenne des notes de préférences des volumes 5 déjà positionnés et non désisté et du au moins un volume 5 de la liste de liste d'attente à positionner dans la trame capable géométrique 2.

Comme pour toute nouvelle détermination de combinaisons, la position des volumes 5 déjà positionnés est susceptible d'être modifiée.

### VARIANTE POSSIBLE

De plus, les paramètres pris en compte dans la détermination des combinaisons de position sont les préférences de positionnement définis pour chaque volume 5 de géométrie fixe. Cependant, il est envisageable que les mêmes étapes soient mises en œuvre pour des géométries de volumes 5 paramétrées et classées par ordre de préférence mais non définies. De la même manière qu'expliqué plus haut, à partir des premiers volumes 5 pris en compte, ie à positionner dans la trame capable géométrique 2, le module informatisé de combinaisons de positions de volumes 5 détermine des combinaisons de position respectant les préférences de position et également les préférences de géométrie. Les mêmes itérations positionnent au fur et à mesure, ie par ordre chronologique, chaque volume 5 de l'ensemble des volumes 5 à positionner dans la trame jusqu'à qu'un nouveau volume 5 considéré ne puisse être positionné en respectant au moins une préférence de position et, ici, le cas échéant, une préférence de géométrie des volumes 5.

Autrement dit, le module informatisé de combinaisons de positions de volumes 5 peut prendre en comptes à la fois des volumes 5 dont la géométrie est définie, ie fixée, comme expliqué plus haut et des volumes 5 dont la géométrie est paramétrée. Bien sûr, tous les volumes 5 de géométrie paramétrée ou définie ont également des degrés de liberté de position et/ou des contraintes de position définis par ordre de préférence.

De même, le module de choix choisit donc une combinaison de position pour les volumes 5 définis.

### AUTRES ALGORITHMES OU ENSEMBLE DE REGLES POSSIBLES

On a décrit un ensemble de règles à respecter particulier. D'autres sont envisageables : il suffit de se donner un ensemble de règles et le module informatisé de combinaisons de positions de volumes 5 détermine le ou les combinaisons de positions possibles des volumes 5 vérifiant ces règles.

Il est aussi envisageable d'appliquer des algorithmes connus d'optimisation de couple entre deux ensembles (ici les volumes 5 et la trame géométrique à remplir) comme les algorithmes dit de mariages stables (« *stable matching* ») et ses variantes. Un exemple d'algorithme envisageable est celui de Gale-Shapley.

## Revendications

1. Procédé informatisé de positionnement de volumes (5) immobiliers au sein d'un bâtiment (100) immobilier,
le bâtiment immobilier étant défini par une trame (2) géométrique tridimensionnelle formée par un ensemble d'unités élémentaires (3) tridimensionnelles prédéterminées, au sein d'un gabarit (1) existant ou constructible,
le procédé comprenant les étapes successives suivantes :
- un module informatisé de paramétrage définit des paramètres de bâtiment (100) du bâtiment (100) immobilier,
- un module informatisé de paramétrage définit des paramètres de volume (5) d'un volume (5) immobilier :
∘ géométrie tridimensionnelle du volume (5) d'après un nombre d'unités élémentaires (3) le composant et leurs positions relatives au sein du volume (5), et
∘ au moins un degré de liberté de position du volume (5) au sein de la trame capable géométrique (2) géométrique, et/ou
∘ au moins une contrainte de position du volume (5) au sein de la trame capable géométrique (2) géométrique,
- un module informatisé (5) de combinaisons de positions de volumes détermine une combinaison de positions des volumes (5), définis par le module de paramétrage, au sein de la trame capable géométrique (2) d'après les paramètres de chaque volume (5) et les paramètres de bâtiment (100), et
- le module informatisé de combinaisons de positions de volumes (5) positionne les
volumes (5) au sein du bâtiment (100) d'après la combinaison déterminée.

2. Procédé selon la revendication précédente dans lequel le au moins un degré de liberté de position du volume (5) est défini comme :
- un étage minimum au sein de la trame capable géométrique (2),
- une orientation géographique, et/ou
au moins une contrainte de position du volume (5) est définie comme :
- une interdiction d'une orientation, et/ou
- une exclusion d'un étage.

3. Procédé informatisé selon l'une quelconque des revendications précédentes selon lequel :
- le module informatisé de paramétrage définit au moins un des paramètres du bâtiment (100) suivants :
∘ définition des unités élémentaires de la trame susceptibles de former un volume (5),
∘ définition des unités élémentaires qui peuvent ou pas fusionner avec d'autres unités élémentaires,
∘ définition des étages des unités élémentaires (3),
∘ définition des orientations des unités élémentaires (3),
∘ définition des surfaces des unités élémentaires (3),
∘ définition des prix des unités élémentaires (3),
∘ nombre maximum d'unités élémentaires (3) dans un volume (5),
∘ nombre maximum d'unités élémentaires (3) horizontales et/ou verticales dans un volume (5),
∘ pourcentage maximum de volumes (5) ayant la même géométrie dans le bâtiment,
∘ positions possibles de la ou les circulations verticales (escalier et/ou ascenseur) au sein du bâtiment lorsqu'applicable,
∘ position des circulations horizontales,
∘ une distance maximale moyenne entre l'accès des volumes (5) définis et l'accès à au moins une sortie de secours,
∘ programme(s) possible(s) pour chaque unité élémentaire (3)
∘ définition d'un plus petit volume (5) résiduel.

4. Procédé selon l'une quelconque des revendications 1 à 3 comprenant en outre les étapes suivantes :
- le module informatisé de paramétrage :
∘ attribue une note de préférence aux au moins un degré de liberté et/ou aux au moins une contrainte de position de chaque volume (5), et
- pour chaque nouveau volume (5) défini, le module informatisé de combinaisons de positions de volumes (5)
∘ détermine une combinaison de position de tous les volumes (5) définis pour laquelle une moyenne pondérée des notes de préférence des volumes (5) définis est minimale ou maximale, ou
∘ place ledit nouveau volume (5) sur une liste d'attente.

5. Procédé informatisé selon la revendication précédente selon lequel,
en cas de suppression d'un volume (5) déjà positionné au sein d'une combinaison de positions de volume (5) déterminée,
le module informatisé de choix choisit au moins un volume (5) de la liste d'attente pour lequel une combinaison de position des volumes (5) déjà positionnés et d'au moins un volume (5) de la liste d'attente pour laquelle une moyenne pondérée des notes de préférence est minimale ou maximale.

6. Procédé informatisé selon l'une quelconque des revendications
précédentes selon lequel le module informatisé de paramétrage définit en outre une position exacte d'un volume immobilier (5) au sein de la trame capable géométrique (2) géométrique.

7. Programme informatique comprenant des instructions de code de
programme pour l'exécution des étapes du procédé selon l'une quelconque des revendications 1 à 6 lorsque ledit programme est exécuté sur un ou des ordinateurs ou un ou des modules informatisés.

8. Bâtiment immobilier (100) conçu d'après le procédé de l'une
quelconque des revendications 1 à 6.
